# EUROPEAN PATENT APPLICATION

(11) **EP 0 911 345 A2**
(43) Date of publication of application: **28.04.1999**
(21) Application number: 98119555.5
(22) Date of filing: 16.10.1998
(51) Int. Cl.: C08B 37/00

(54) **High viscous xanthan gum and process for preparation thereof**

(30) Priority: 20.10.1997 JP 19970304843
(71) Applicant: THE NISSHIN OIL MILLS, LTD., Tokyo, 104-8285 (JP)
(72) Inventor: Ikuina, Junichi, Yokosuka-shi, Kanagawa-ken, 238 0026 (JP); Nishida, Yutaka, Yokosuka-shi, Kanagawa-ken, 239-0841 (JP); Terui, Masako, Kamakura-shi, Kanagawa-ken, 247-0064 (JP)
(74) Representative: Casalonga, Axel, et al

(57) **Abstract**

Xanthan gum having high viscosity and being such that "mamako" (an undissolved lump of flour) is hard to form and a process for the preparation thereof are provided. Namely, this invention relates to high viscous xanthan gum showing a viscosity of 4,000 to 25,000 mPa•s (Brookfield type viscometer, 6 rpm, 25°C) when made into an aqueous solution of 0.5 % by weight as the xanthan gum concentration, and a process for the preparation of high viscous xanthan gum which comprises heating xanthan gums, whose loss on drying (under normal pressures, 105°C, 5 hours heating) is 50 % by weight or less, at 100 to 140°C for 30 minutes or more.

## Description

### Field of the Invention and Related Art Statement

This invention relates to high viscous xanthan gum and a process for preparation thereof. Such high viscous xanthan gum can be used as a thickener, a stabilizer or an additive in the food, cosmetic, drug or petroleum field.

Xanthan gum is a kind of microbic polysaccharide produced from carbohydrates such as starches, glucose and sucrose by a microorganism Xanthomonas campestris. The structure of xanthan gum is mainly composed of D - glucose, D - mannose and sodium, potassium and calcium salts of D - glucuronic acid, and the main chain is composed of β - 1,4 bond of D - glucose. As processes for the preparation of xanthan gum, there have, for example, been known a process which comprises, after the fermentation step, heat treating the fermentation broth for sterilizing the microorganism, precipitating xanthan gum therefrom with an alcohol such as isopropyl alcohol, removing the alcohol from the precipitate, and then drying and grinding the resultant precipitate.

Japanese published Laid - open Patent Application No. 156,594/1980 discloses a process which comprises, for increasing the viscosity of xanthan gum during the preparation step, precipitating xanthan gum with a lower alkanol after cooling the fermentation broth to about 70 to 90° F (about 21.1 to 32.2°C).

Further, there is a process which comprises, when thickening an aqueous solution of xanthan gum, adding a salt.

### Object and Summary of the Invention

However, usual xanthan gum does not sufficiently satisfy the needs of users on viscosity characteristics. Namely, the higher the viscosity of xanthan gum is, the more the addition amount can be reduced, and therefore, xanthan gum having higher viscosity characteristics has been desired. Further, usual xanthan gum has problems, for example, that when it is pored in a large amount into water, swelled particles stick together to make strong membranes around the xanthan gum powder masses, and as a result viscous masses called "mamako" (an undissolved lump of flour) are formed, and thus dispersion cannot readily be made.

For solving the problems, the present inventors have made sequential researches, and found that xanthan gum obtained by heating xanthan gum in a solid state has excellent viscosity characteristics, and completed the invention.

Such present invention relates to high viscous xanthan gum showing a viscosity of 4,000 to 25,000 mPa • s (Brookfield type viscometer, 6 rpm, 25°C) when made into an aqueous solution of 0.5 % by weight as the xanthan gum concentration.

The high viscous xanthan gum of the invention, generally, has a property that when the above aqueous solution is heated at 120°C for 3 hours in an autoclave, the viscosity lowers by 3,000 mPa • s (Brookfield type viscometer, 6 rpm, 25°C) or more compared to before the heating.

The high viscous xanthan gum of the invention can, generally, be obtained by heating xanthan gum, whose loss on drying (under normal pressures, 105 °C, 5 hours heating) is 50 % by weight or less, at 100 to 140°C for 30 minutes or more.

The above heating can be carried out either in a gas or in a liquid. When carried out in a gas, since the product may be colored when carried out in the presence of oxygen, for example in the air, it is desirable to carry out the heating in an inert gas. Coloring can also be avoided by carrying out the heating in a gas under reduced pressure. When the heating is carried out in a liquid, the heating is carried out in such a state that the xanthan gum is dispersed in an inert solvent not dissolving xanthan gum. Coloring does not occur either when the heating is carried out in such a liquid.

### Brief Description of the Drawings

Fig. 1 is an explanatory drawing of the X - ray diffraction pattern of xanthan gum.
Fig. 2 shows the IR spectrum of the high viscous xanthan gum of Example 1.
Fig. 3 shows the IR spectrum of the starting material xanthan gum of Example 1.

### Detailed Description of the Invention

The invention is detailedly described below.

As stated above, the high viscous xanthan gum of the invention can be obtained by heating xanthan gums, whose loss on drying (under normal pressure, 105 °C, 5 hours heating; hereinafter, "loss on drying" is assumed to mean loss on drying under these conditions, unless otherwise defined) is 50 % by weight or less, at 100 to 140°C for 30 minutes or more.

The starting material xanthan gum used for preparing the high viscous xanthan gum of the invention has a loss on drying of 50 % by weight or less, preferably 20 % by weight or less, more preferably 15 % by weight or less. As such starting material xanthan gum, there can first be used xanthan gum in a state of powder, granule or the like on the market. As such starting material xanthan gum, there can also be used such xanthan gum that, in a process of the preparation of xanthan gum which comprises fractionally precipitating xanthan gum with a lower alkanol from a culture broth obtained by liquid culturing Xanthomonas campestris using corn starch, glucose or the like as the carbon source, the loss on drying became 50 % by weight or less during the drying step after the fractional precipitation.

When the loss on drying of the starting material xanthan gum is larger than 50 % by weight, the temperature of the xanthan gum does not sufficiently rise and no thickening effect is brought about.

For preparing the high viscous xanthan gum of the invention, such starting material xanthan gum is heated. The heating is carried out at 100 to 140°C, preferably 100 to 130 °C, more preferably 105 to 125 °C, for 30 minutes or more, preferably 30 minutes to 10 hours, more preferably 30 minutes to 7 hours, further more preferably 30 minutes to 6 hours. Among these conditions, heating for comparatively short time at the higher temperature side or heating for comparatively long time at the lower temperature side is preferred. Most preferably, the heating is carried out at 105 to 125°C for 30 minutes to 6 hours. When the heating temperature is less than 100°C, the improvement of the viscosity is insufficient, and when it is more than 140°C, a possibility to be colored generally becomes larger.

The above heating can be carried out either in a gas or in a liquid. When carried out in a gas, since the product may be colored when carried out in the presence of oxygen, for example in the air, it is desirable to carry out the heating in an inert gas which does not react with xanthan gum. As the inert gas, there can be mentioned nitrogen gas, helium gas, carbon dioxide gas, steam, etc. Coloring can also be avoided by carrying out the heating in a gas under reduced pressure. As the gas in this occasion, it goes without saying that the above inert gas can be used, and further air can also be used without the occurrence of coloring depending on the degree of the reduced pressure. As the degree of the reduced pressure, there is no particular limitatin, but a reduced pressure of 200 to 0.01 mmHg is suitable.

When the heating is carried out in a liquid, the heating is carried out in such a state that xanthan gum is suspended in an inert solvent not dissolving xanthan gum. Coloring does not occur either when the heating is carried out in such a liquid. As the inert solvent, there is no particular limitation so long as it does not dissolve xanthan gum and does not react with xanthan gum. As examples of the inert gas, there can be mentioned alkanols having 1 to 6 carbon atoms such as methanol, ethanol, n - propanol, isopropanol, n - butanol, n - pentyl alcohol and n - hexyl alcohol, alkanediols having 1 to 4 carbon atoms such as 1,3 - butylene glycol, propylene glycol and ethylene glycol, mono - or di - lower alkyl (C=1 to 4, particularly 1 or 2) ethers of ethylene glycol such as ethylene glycol dimethyl ether, ethylene glycol diethyl ether, ethylene glycol monomethyl ether (methylcellosolve) and ethylene glycol monoethyl ether (ethylcellosolve), diethylene glycol, mono- or di- lower alkyl (C=1 to 4, particularly 1 or 2) ethers of diethylene glycol such as diethylene glycol dimethyl ether, diethylene glycol diethyl ether, diethylene glycol monomethyl ether, diethylene glycol monoethyl ether and diethylene glycol monobutyl ether, etc.

The reaction in an inert solvent can be carried out in some occasion under pressure, for example in an autoclave.

The isolation of high viscous xanthan gum obtained after the heating treatment can, for example, be carried out by filtering the heat treated suspension, washing, if necessary, the cake with a low boiling solvent such as ethanol, and vacuum drying the resultant cake.

The high viscous xanthan gum of the invention prepared by the above process is different from usual xanthan gum in its high viscosity. Namely, the high viscous xanthan gum of the invention shows a viscosity of 4,000 to 25,000 mPa • s (mPa • s=millipascal x second) (Brookfield type viscometer, 6 rpm, 25°C; hereinafter, the viscosity value is assumed to mean one under these conditions, unless otherwise defined; 1 mPa • s=1 cP (centipoise)), preferably 4,500 to 23,000 mPa • s, more preferably 5,000 to 22,000 mPa • s, still more preferably 6,000 to 21,000 mPa • s, when made into an aqueous solution of 0.5 % by weight as the xanthan gum concentration. When it is taken into account that the viscosity of an aqueous 0.5 % by weight solution of xanthan gum on the market is on the order of 1,600 to 3,300 mPa • s, the high viscosity of the xanthan gum of the invention is surprising.

The high viscous xanthan gum of the invention is, generally, such that when an aqueous 0.5 % by weight solution thereof as xanthan gum concentration is heated at 120°C for 3 hours in an autoclave, the viscosity of the solution lowers by 3,000 mPa • s or more, preferably 3,000 to 23,000 mPa • s, more preferably 4,000 to 20,000 mPa • s, still more preferably 5,000 to 20,000 mPa • s, compared to before the heating.

The high viscous xanthan gum of the invention is, generally, such that its peak width at half height of the peak around 2 θ :20° in X- ray diffraction is smaller by 2 % or more, preferably 2 to 6 %, more preferably 2.5 to 5 % than that of usual xanthan gum used as the starting material.

The high viscous xanthan gum of the invention, generally, has an apparent weight average molecular weight of 16,000,000 or more. The apparent weight average molecular weight of xanthan gum in the invention (weight average molecular weight is also called absolute molecular weight) is a value obtained by preparing aqueous dilutions of various concentrations thereof, measuring the light scattering and increase in refractive index of them, and carrying out Zimm analysis based on the measured values. The limit of measurement in this method is on the order of 20,000,000, and molecular weight higher than that cannot accurately be determined. The reason that the word "apparent" was attached is that it is estimated that the structural formula does not change even by the heating and the viscosity increases merely by intertwining.

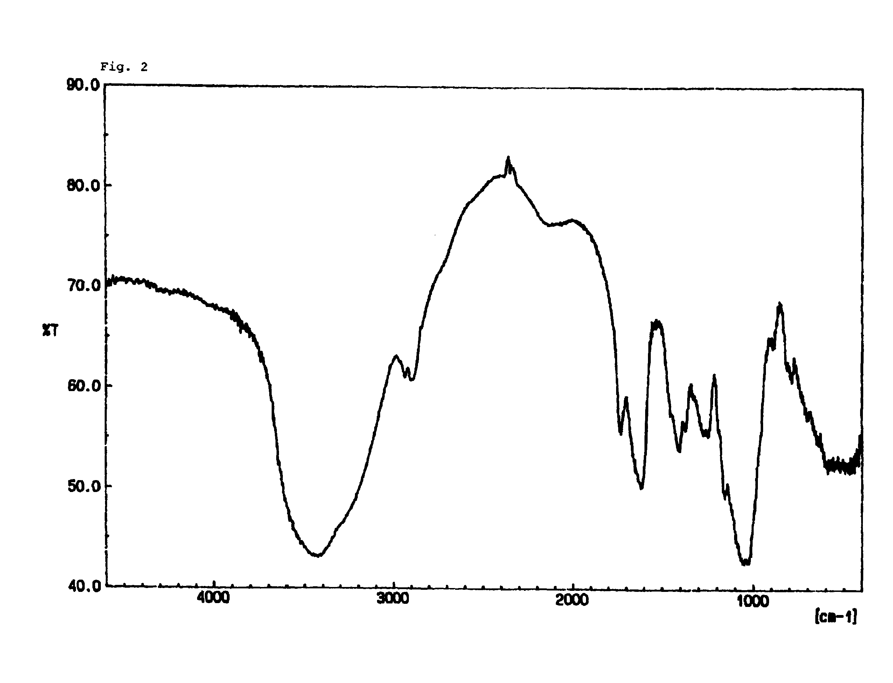

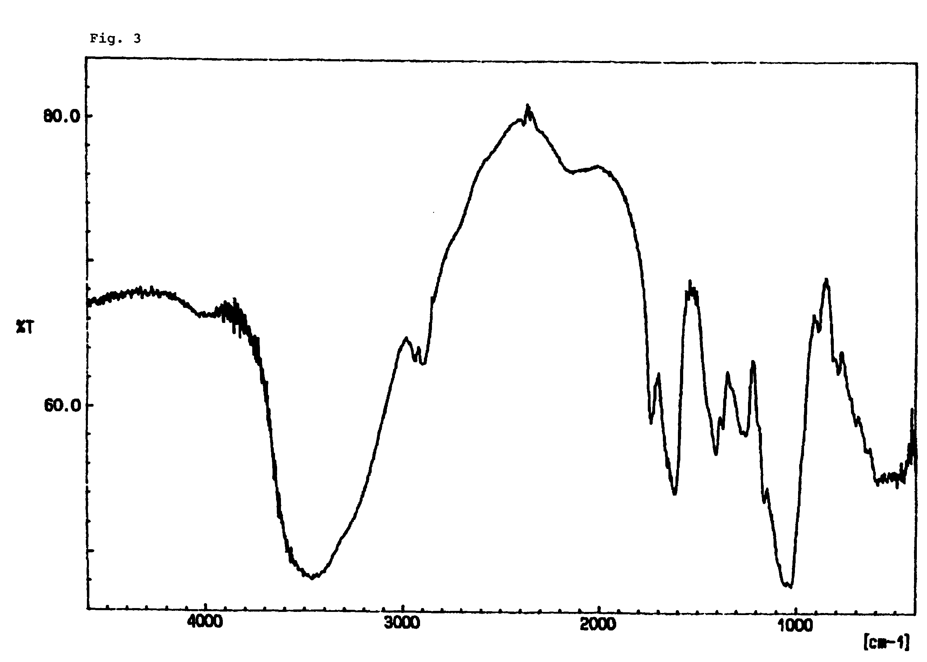

It is estimated that there is no substantial change between the high viscous xanthan gum of the invention and the starting material xanthan gum in NMR spectrum, elementary analysis and IR spectrum (KBr method and FT - IR method). As a specific example, the IR spectra (KBr method) Of the high viscous xanthan gum and the starting material xanthan gum in Example 1 are shown in Fig. 2 and Fig. 3, respectively.

The high viscous xanthan gum of the invention can be used for the same uses as usual xanthan gum, but at that time can exert the same thickening effect in a smaller use amount compared to usual product. Further, water dispersibility is also improved, and thus workability is also better. By using such high viscous xanthan gum of the invention alone or in combination with other water soluble gelling agents or emulsifiers, stable gels or emulsions can be obtained. Therefore, the high viscous xanthan gum of the invention can be used as a water soluble thickener first in the fields of food, cosmetics, drugs, etc., and further in general industrial fields including the petroleum industry.

The invention is specifically described below by a comparative example, examples and a reference example, but these are for illustrating the invention, and not for limiting the invention at all.

### Comparative example 1

Aqueous 0.5 % by weight solutions of xanthan gums on the market were prepared, and their viscosities were measured (A). Further, these solutions were autoclaved (120 °C, 3 hours), and then their viscosities were measured (B). The results are shown in Table 1.

**Table 1**

| Unit:mPa • s | | | |
|---|---|---|---|
| | Made by The NutraSweet Kelco Co., a Unit of Monsanto Co. | Made by Rhone-Poulenc Chemicals Co. | Made by Kojin Co., Ltd. |
| Viscosity(A) | 1680 | 3300 | 2020 |
| Viscosity(B) | 1000 | 1220 | 1840 |

| | | | |
|---|---|---|---|
| 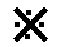 Measurement conditions: Brookfield type viscometer, 6rpm, 25°C | | | |

### Example 1

Ten gram portions of xanthan gum powder (made by The NutraSweet Kelco Co., a Unit of Monsant Co., loss on drying: 14 % by weight) were dispersed in 40 g portions of 1,3 - butylene glycol, and the dispersions were heated at temperatures of 80 to 120°C, respectively. Each of the resultant xanthan gum dispersions was filtered, and the cake was washed with 40 g of ethanol. The resultant cakes were vacuum dried for 12 hours to remove the ethanol, whereby high viscous xanthan gums were obtained. Aqueous 0.5 % by weight solutions of them were prepared, and the viscosities thereof were measured (A). In the dispersion of these xanthan gums into water, "mamako" is harder to form and their dispersibilities were improved, compared to the xanthan gum of Comparative example 1. Then, the above aqueous 0.5 % by weight solutions were autoclaved (120°C, 3 hours), and then the viscosities thereof were measured (B). The results are shown in Table 2.

**Table 2**

| Unit:mPa • s | | | | | | | |
|---|---|---|---|---|---|---|---|
| Heating temperature | 80°C | 100°C | 105°C | 110°C | 115°C | 120°C | 120°C |
| Heating time | 6 hours | 4 hours | 6 hours | 5 hours | 3 hours | 2 hours | 0.5 hour |
| Viscosity(A) | 2480 | 5800 | 13080 | 13600 | 20200 | 12600 | 6000 |
| Viscosity(B) | 1260 | 1100 | 780 | 1100 | 1300 | 950 | 800 |

| | | | | | | | |
|---|---|---|---|---|---|---|---|
| 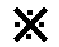 Measurement conditions: Brookfield type viscometer, 6rpm, 25°C | | | | | | | |

### Example 2

Ten gram portions of xanthan gum powder (made by Rhone - Poulenc Chemicals Co., loss on drying: 8 % by weight) were dispersed in 40 g portions of 1,3 - butylene glycol, and the dispersions were heated at temperatures of 105 to 120°C, respectively. Each of the resultant xanthan gum dispersions was filtered, and the cake was washed with 40 g of ethanol. The resultant cakes were vacuum dried for 12 hours to remove the ethanol, whereby high viscous xanthan gums were obtained. Aqueous 0.5 % by weight solutions of them were prepared, and the viscosities thereof were measured (A). In the dispersion of these xanthan gums into water, "mamako" is harder to form and their dispersibilities were improved, compared to the xanthan gums of Comparative example 1. Then, the above aqueous 0.5 % by weight solutions were autoclaved (120 °C, 3 hours), and then the viscosities thereof were measured (B). The results are shown in Table 3.

**Table 3**

| Unit:mPa • s | | | | | |
|---|---|---|---|---|---|
| Heating temperature | 105°C | 110°C | 115°C | 120°C | 120°C |
| Heating time | 3.5 hours | 2.5 hours | 1.5 hours | 1 hour | 0.5 hour |
| Viscosity(A) | 7800 | 8700 | 7000 | 7000 | 6460 |
| Viscosity(B) | 1800 | 1690 | 1100 | 1300 | 1500 |

| | | | | | |
|---|---|---|---|---|---|
| 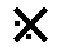 Measurement conditions: Brookfield type viscometer, 6rpm, 25°C | | | | | |

### Example 3

Ten grams portions of xanthan gum powder (made by The NutraSweet Kelco Co., a Unit of Monsant Co., loss on drying: 12 % by weight) were heated at 115°C for 3 hours in gases or under reduced pressure (air, 60 mmHg), respectively. Aqueous 0.5 % by weight solutions of the resultant high viscous xanthan gums were prepared, and the viscosities thereof were measured (A). In the dispersion of these xanthan gums into water, "mamako" is harder to form and their dispersibilities were improved, compared to the xanthan gums of Comparative example 1. Then, the above aqueous 0.5 % by weight solutions were autoclaved (120 °C, 3 hours), and then the viscosities thereof were measured (B). The results are shown in Table 4.

**Table 4**

| Unit:mPa • s | | | | | |
|---|---|---|---|---|---|
| | Air | Vacuum | Nitrogen gas | He gas | CO₂ gas |
| Viscosity(A) | 5430 | 6500 | 6550 | 8800 | 5000 |
| Viscosity(B) | 1600 | 1200 | 950 | 800 | 1050 |
| Coloring | colored | not colored | not colored | not colored | not colored |

| | | | | | |
|---|---|---|---|---|---|
| 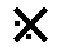 Measurement conditions: Brookfield type viscometer, 6rpm, 25°C | | | | | |

Further, aqueous 0.01 to 0.09 % by weight solutions of the above high viscous xanthan gum obtained by the heating under reduced pressure were prepared, and the light scattering and increase in refractive index thereof were measured, and Zimm analysis was carried out thereon to determine its apparent weight average molecular weight. Light scattering and increase in refractive index were measured using DRM- 7000 made by Otsuka Denshi Co., Ltd. and DRM - 1030 made by Otsuka Denshi Co., Ltd., respectively.

As a result, the apparent weight average molecular weight of the usual product xanthan gum was 3,150,000 to 3,700,000, whereas that of the high viscous xanthan gum was 20,000,000 or more.

### Example 4

Ten grams portions of xanthan gum powder (made by Rhone - Poulenc Chemicals Co., loss on drying: 9 % by weight) were heated at 115 °C for 3 hours in gases or under reduced pressure (air, 160 mmHg), respectively. Aqueous 0.5 % by weight solutions of the resultant high viscous xanthan gums were prepared, and the viscosities thereof were measured. In the dispersion of these xanthan gums into water, "mamako" is harder to form and their dispersibilities were improved, compared to the xanthan gum of Comparative example 1. The results are shown in Table 5.

**Table 5**

| Unit:mPa • s | | | | | |
|---|---|---|---|---|---|
| | Air | Vacuum | Nitrogen gas | He gas | Co₂ gas |
| Viscosity mPa • s | 6850 | 7100 | 6700 | 8060 | 7840 |
| Coloring | colored | not colored | not colored | not colored | not colored |

| | | | | | |
|---|---|---|---|---|---|
| 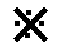 Measurement conditions: Brookfield type viscometer, 6rpm, 25°C | | | | | |

### Reference example 1

The starting material xanthan gum used in Example 1 and the high viscous xanthan gum obtained in Example 1, and the starting material xanthan gum used in Example 2 and the high viscous xanthan gum obtained in Example 2 were vacuum dried at 60°C to make the water content 10 % by weight or less, respectively. A pelletal smooth surface was made of each of the resultant xanthan gums by a load of 200 kgwt./cm² for 15 seconds, and X - ray diffraction measurement was made using the surface. Namely, scanning was carried out at 36 kV, 50 mA and a scanning axis 2 θ of 5 to 40° using K α-rays (wavelength of 1.5418 Å).

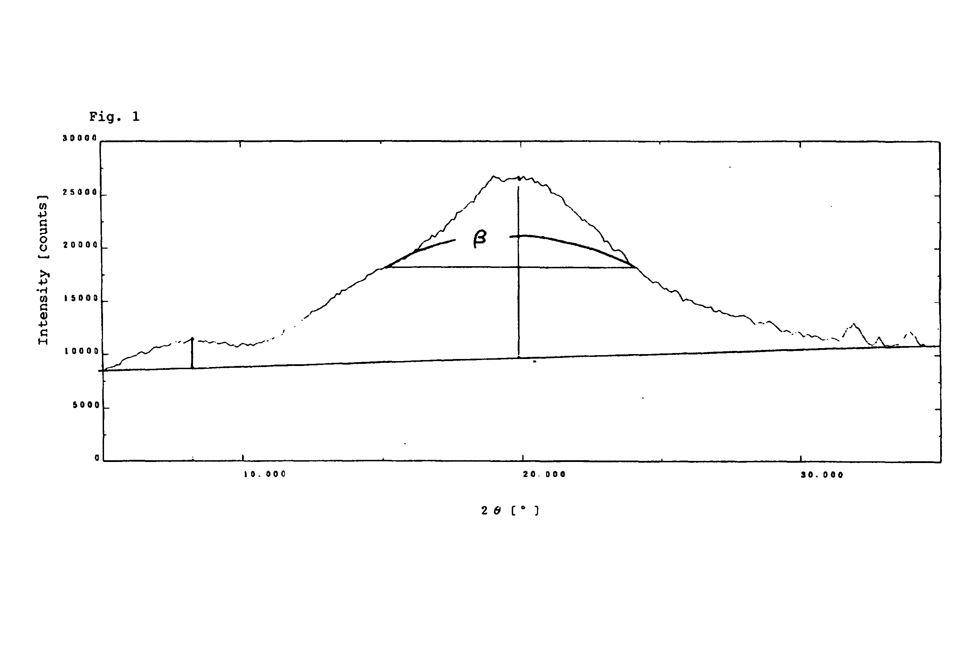

As shown in Fig. 1, a baseline was drawn between 5° and 40°, lines were drawn from the baseline to the tops of the peaks around 7° (A) and 20° (B), respectively, and the ratio (the height of the peak around 7° /the height of the peak around 20°) was assumed to be the crystal parameter. Further, the peak width at half height of the peak around 20° was determined. The results are shown in Table 6.

**Table 6**

| | Around7° | Around20° | Around7°/Around20° | β (rad) |
|---|---|---|---|---|
| Starting material xanthan gum of Example 1 | 0.70 | 4.15 | 0.169 | 0.150 |
| High viscous xanthan gum of Example 1 | 0.65 | 4.44 | 0.146 | 0.145 |
| Starting material xanthan gum of Example 2 | 0.90 | 4.70 | 0.191 | 0.168 |
| High viscous xanthan gum of Example 2 | 0.80 | 5.00 | 0.160 | 0.163 |

| | | | | |
|---|---|---|---|---|
| rad: radian | | | | |

As shown above, the high viscous xanthan gum of the invention is an extremely excellent water soluble thickener having viscosity characteristics of several times those of usual xanthan gum, and thus the same effect as in usual products can be attained at a smaller addition amount. Further, in the high viscous xanthan gum of the invention, water dispersibility is also improved, and thus workability is better.

## Claims

1. High viscous xanthan gum showing a viscosity of 4,000 to 25,000 mPa • s (Brookfield type viscometer, 6 rpm, 25 °C) when made into an aqueous solution of 0.5 % by weight as the xanthan gum concentration.

2. The high viscous xanthan gum according to claim 1 wherein when the aqueous solution is heated at 120°C for 3 hours in an autoclave, the viscosity lowers by 3,000 mPa • s (Brookfield type viscometer, 6 rpm, 25°C) or more, compared to before the heating.

3. A process for the preparation of high viscous xanthan gum which comprises heating xanthan gums, whose loss on drying (under normal pressures, 105°C, 5 hours heating) is 50 % by weight or less, at 100 to 140°C for 30 minutes or more.

4. The process according to claim 3 wherein the heating condition is at 105 to 125°C for 30 minutes to 6 hours.

5. The process according to claim 3 or 4 wherein the heating is carried out in an inert gas.

6. The process according to any of claims 3 to 5 wherein the heating is carried out in a gas under reduced pressure.

7. The process according to claim 3 or 4 wherein the heating is carried out in such a state that the xanthan gum is dispersed in an inert solvent not dissolving xanthan gum.
